## Europäisches Patentamt

## European Patent Office

## Office européen des brevets

(19)

(11) Numéro de publication: **0 249 539**
**B1**

(12)

# FASCICULE DE BREVET EUROPEEN

(45) Date de publication du fascicule du brevet:
**07.11.90**

(51) Int. Cl.⁵: **B60G 11/10**

(21) Numéro de dépôt: **87401261.0**

(22) Date de dépôt: **04.06.87**

(54) **Suspension pour un train de deux roues d'un véhicule, système de rappel élastique de chaque roue du train et véhicule équipé d'une telle suspension ou d'un tel système de rappel élastique.**

(30) Priorité: **09.06.86 FR 8608283**

(43) Date de publication de la demande:
**16.12.87 Bulletin 87/51**

(45) Mention de la délivrance du brevet:
**07.11.90 Bulletin 90/45**

(84) Etats contractants désignés:
**DE GB IT SE**

(56) Documents cités:
**FR-A- 975 621**
**FR-A- 2 574 028**
**GB-A- 198 703**
**GB-A- 2 148 450**
**US-A- 1 938 847**
**US-A- 4 027 898**

(73) Titulaire: **AEROSPATIALE Société Nationale Industrielle, 37, Boulevard de Montmorency, F-75781 Paris Cédex 16(FR)**

(72) Inventeur: **Aubry, Jacques, 2 avenue Marie Gasquet, F-13480 Cabries(FR)**

(74) Mandataire: **Bonnetat, Christian et al, CABINET BONNETAT 23, Rue de Léningrad, F-75008 Paris(FR)**

ACTORUM AG

## Description

La présente invention concerne une suspension pour un train de deux roues d'un véhicule, un système de rappel élastique de chaque roue du train, ainsi qu'un véhicule équipé d'au moins une telle suspension ou d'au moins un tel système de rappel élastique. La suspension conforme à l'invention est tout particulièrement, quoique non exclusivement, appropriée à être utilisée comme suspension arrière d'un véhicule automobile du type à traction avant.

On connaît déjà des suspensions comportant deux bras articulés audit véhicule et pouvant osciller autour d'un axe transversal audit véhicule, chaque bras portant l'une desdites roues, des moyens élastiques étant associés auxdits bras pour contrecarrer les mouvements verticaux desdites roues.

Dans les suspensions classiques de ce type, les moyens élastiques sont généralement constitués de ressorts hélicoïdaux ou à lames droites, ou de barres de torsion.

Ces différents moyens présentent des inconvénients spécifiques. Ainsi, pour les ressorts à lames droites et les barres de torsion, il est nécessaire de prévoir des moyens de renfort particuliers. Les ressorts hélicoïdaux, quant à eux, sont encombrants et empiètent sur l'habitacle.

La présente invention a pour but d'éviter ces inconvénients, et concerne en particulier une suspension dans laquelle les moyens élastiques sont conçus de façon telle qu'ils présentent un encombrement réduit et qu'ils ne nécessitent pas l'utilisation de renforts particuliers, tout en conservant les avantages et propriétés des moyens classiques.

A cet effet, la suspension du type indiqué ci-dessus est remarquable, selon l'invention, en ce que lesdits moyens élastiques comportent, pour chaque roue, au moins une lame courbe reliée, à une première extrémité, au bras oscillant correspondant au voisinage de l'extrémité de ce dernier articulée audit véhicule, et reliée, à sa seconde extrémité, au véhicule.

Avantageusement, ladite lame courbe est fixée rigidement au bras oscillant et est articulée au véhicule.

Selon une autre caractéristique de l'invention, ladite lame courbe s'étend au moins sensiblement concentriquement à l'axe de la roue en étant disposée à l'avant de cette dernière ; en particulier, elle s'étend sur un angle dont le sommet est sensiblement confondu avec le centre de la roue et dont l'amplitude est sensiblement égale à 90°.

Selon encore d'autres caractéristiques de l'invention, la première extrémité de ladite lame courbe est conformée en boucle et est fixée au bras oscillant de façon que ladite boucle soit coaxiale à l'axe d'articulation du bras sur le châssis et, en particulier, à son extrémité articulée au châssis, le bras se termine par un manchon sur lequel est fixée ladite boucle formant la première extrémité de la lame. Ce manchon peut servir de passage à une barre de torsion anti-dévers reliant les deux roues du train.

La présente invention concerne également un système de rappel élastique d'une roue d'un train de deux roue, d'un véhicule équipé d'une suspension comprenant deux bras pouvant osciller autour d'un axe transversal audit véhicule et portant chacun l'une desdites roues, qui est remarquable, selon l'invention, en ce qu'il comporte au moins une lame courbe destinée à être reliée, à une première extrémité, au bras oscillant correspondant au voisinage de l'extrémité de ce dernier articulée audit véhicule, et, à sa seconde extrémité, au véhicule.

En particulier, ladite lame courbe comporte, à sa première extrémité, des moyens de fixation permettant de la fixer rigidement au bras oscillant, et ladite lame courbe comporte, à sa seconde extrémité, des moyens d'articulation permettant de l'articuler au véhicule.

Avantageusement, ladite lame courbe présente une section progressivement décroissante depuis son extrémité destinée à être reliée au bras oscillant jusqu'à son extrémité destinée à être reliéeau véhicule.

De préférence, ladite lame courbe est réalisée en matière composite fibres-résines synthétiques.

Les figures du dessin annexé feront bien comprendre comment l'invention peut être réalisée. Sur ces figures, des références identiques désignent des éléments semblables.

La figure 1 est une vue schématique en élévation et en coupe partielle d'un premier exemple de réalisation d'une suspension conforme à l'invention.

La figure 2 est une vue schématique en élévation et en coupe partielle d'un deuxième exemple de réalisation d'une suspension conforme à l'invention.

La figure 3 est une vue de dessus en coupe partielle de la suspension de la figure 2.

La figure 4 représente une variante de réalisation du détail A de la figure 2.

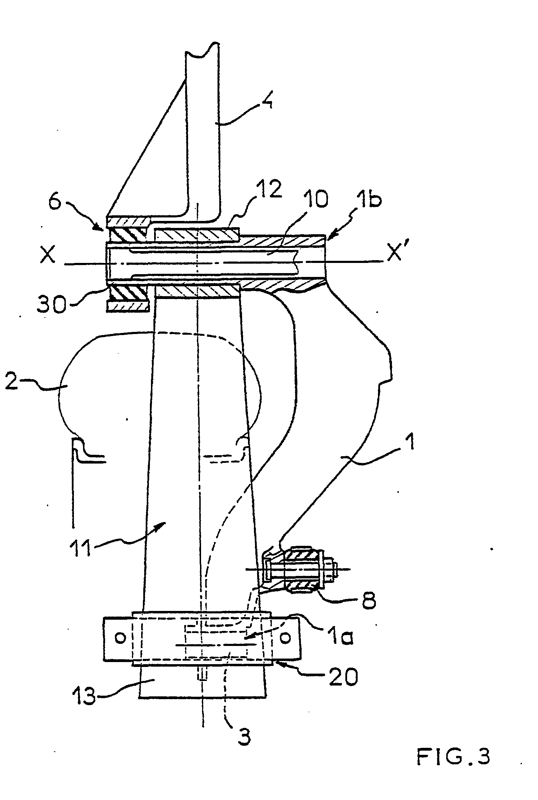

Les exemples de réalisation représentés de la suspension arrière pour véhicule à traction avant sont du type à roue tirée et comportent des bras de suspension 1. Une extrémité 1a de chaque bras 1 est fixée à une roue 2 par des moyens de fixation classiques 3, tandis que l'autre extrémité 1b du bras 1 est articulée à une attache 4 solidaire du châssis 5 du véhicule (non représenté) par l'intermédiaire d'un parlier 6 en élastomère uniquement visible sur la figure 3. De plus, chaque bras 1 est relié au châssis 5 par l'intermédiaire d'un amortisseur télescopique 7 qui est articulé en 8 au bras 1 et fixé par une liaison 9 au châssis 5.

En outre, les deux roues du tran sont reliées par une barre de torsion anti-dévers 10 dont chaque extrémité est insérée et fixée dans l'extrémité tubulaire 1b, réalisée dans cet exemple sous forme d'un manchon 30, reliée au châssis 5, d'un des bras 1. Chaque roue 2 est ainsi susceptible d'un débattement vertical autour de l'articulation du bras 1 au châssis 5.

Selon l'invention, une lame courbe 11 sert de moyen élastique, associé à chaque bras de suspension 1, pour contrecarrer les mouvements verticaux de la roue 2 correspondante.

La lame courbe 11 est reliée, à une première extrémité 12, au bras oscillant 1 au voisinage de l'extrémité 1b de ce dernier articulée au châssis 5, et est reliée, à sa seconde extrémité 13, au châssis 5 du véhicule.

La lame courbe 11, qui est avantageusement réalisée en matière composite fibres-résines synthétiques, s'étend au moins sensiblement concentriquement à l'axe 2a de la roue en étant disposée à l'avant de cette dernière et cela sur un angle dont le sommet est sensiblement confondu avec le centre de la roue et dont l'amplitude est sensiblement égale à 90°.

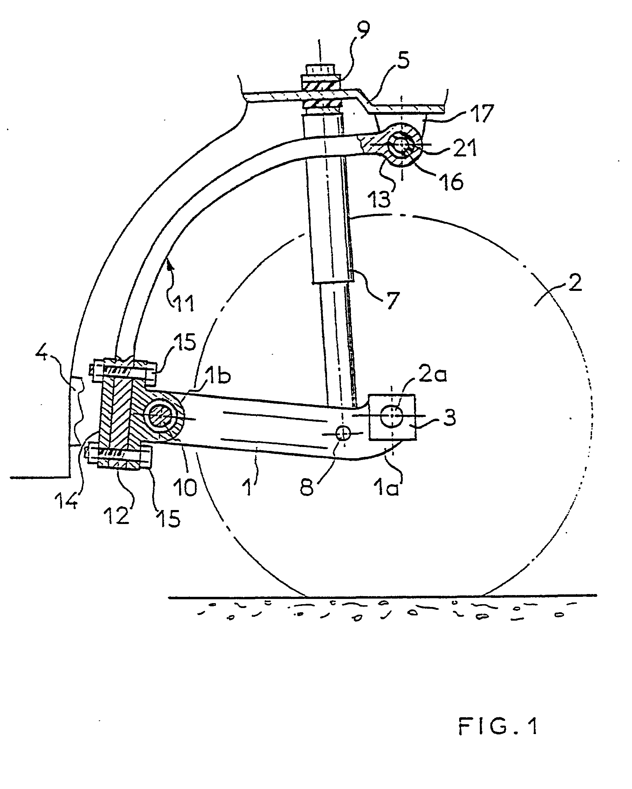

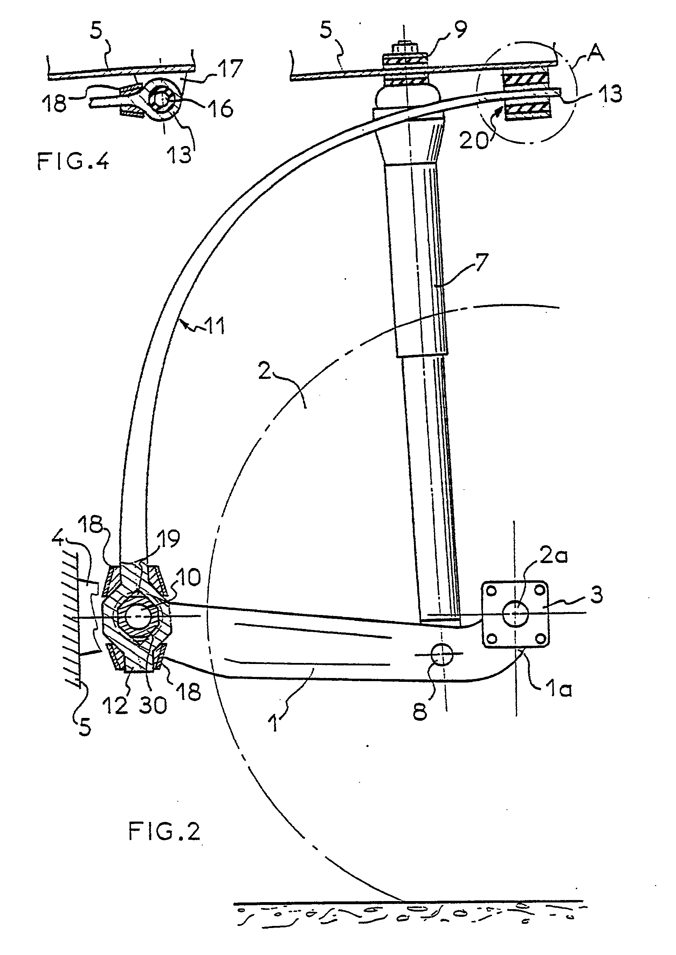

En outre, la lame 11 peut présenter une section constante (figure 1) ou progressivement décroissante depuis son extrémité 12 reliée au bras oscillant 1 jusqu'à son extrémité 13 reliée au châssis 5 du véhicule (exemple de réalisation illustré par les figures 2 et 3). En fait, la géométrie particulière de la lame sera adaptée à la variation longitudinale de raideur désirée.

Dans les exemples de réalisation représentés, la lame courbe 11 comporte, à sa première extrémité 12, des moyens de fixation permettant de la fixer rigidement au bras oscillant 1 et, à sa seconde extrémité 13, des moyens d'articulation permettant de l'articuler au châssis 5 du véhicule.

Dans l'exemple de réalisation montré sur la figure 1, la lame 11 est fixée, à sa première extrémité 12, au bras oscillant 1 par l'intermédiaire d'une plaque de retenue 14 qui est fixée au bras 1 à l'aide de boulons 15 traversant la lame 11.

A son autre extrémité 13 présentant alors un oeil 21, la lame 11 est articulée au châssis 5 en étant monté sur un axe 16 porté par une chape 17 fixée au châssis.

En se référant maintenant aux figures 2 à 4 illustrant un deuxième exemple de réalisation de l'invention et sa variante (figure 4), la lame 11, renforcée à l'aide de frettes 18, présente, à sa première extrémité 12, un orifice 19 à travers lequel passe l'extrémité 1b du bras 1.

La première extrémité 12, conformée en boucle, de la lame 11 est ainsi fixée au manchon 30 du bras 1 en étant coaxiale à l'axe d'articulation X-X' du bras 1 sur le châssis 5.

A son autre extrémité 13, la lame 11 est montée dans un palier d'appui 20 en élastomère fixé au châssis 5.

Une variante de réalisation (figure 4) consiste à articuler la lame 11, à cette extrémité 13, au châssis 5 par l'intermédiaire d'un axe 16a porté par une chape 17a fixée au châssis 5, comme dans l'exemple de réalisation illustré par la figure 1.

Dans ce premier exemple de réalisation, on pourrait bien sûr également envisager de monter l'extrémité 13 de la lame 11 dans un palier d'appui en élastomère.

**Revendications**

1 - Suspension pour un train de deux roues d'un véhicule, du type comportant deux bras articulés audit véhicule et pouvant osciller autour d'un axe transversal audit véhicule, chaque bras portant l'une desdites roues, des moyens élastiques étant associés auxdits bras pour contrecarrer les mouvements verticaux desdites roues et lesdits moyens élastiques comportant, pour chaque roue (2), au moins une lame courbe (11) reliée, à une première extrémité (12), au bras oscillant (1) correspondant au voisinage de l'extrémité (1b) de ce dernier articulée audit véhicule, et reliée, à sa seconde extrémité (13), au véhicule, caractérisée en ce que ladite lame courbe (11) s'étend au moins sensiblement concentriquement à l'axe (2a) de la roue (2) en étant disposée à l'avant de cette dernière et en ce que ladite lame courbe (11) s'étend sur un angle dont le sommet est sensiblement confondu avec le centre de la roue et dont l'amplitude est sensiblement égale à 90°.

2 - Suspension selon la revendication 1, caractérisée en ce que ladite lame courbe (11) est fixée rigidement au bras oscillant (1) et est articulée au véhicule.

3 - Suspension selon l'une quelconque des revendications précédentes, caractérisée en ce que la première extrémité (12) de ladite lame courbe (11) est conformée en boucle et est fixée au bras oscillant (1) de façon que ladite boucle soit coaxiale à l'axe d'articulation (X-X') du bras (1) sur le châssis (5).

4 - Suspension selon la revendication 3, caractérisée en ce que, à son extrémité (1b) articulée au châssis (5), le bras (1) se termine par un manchon (30) sur lequel est fixée ladite boucle formant la première extrémité (12) de la lame (11).

5 - Suspension selon la revendication 4, caractérisée en ce que ledit manchon (30) sert de passage à une barre de torsion anti-dévers (10).

6 - Système de rappel élastique d'une roue d'un train de deux roues d'un véhicule équipé d'une suspension comprenant deux bras pouvant osciller autour d'un axe transversal audit véhicule et portant chacun l'une desdites roues, ledit système comportant au moins une lame courbe (11) destinée à être reliée, à une première extrémité (12), au bras oscillant (1) correspondant au voisinage de l'extrémité (1b) de ce dernier articulée audit véhicule, et, à sa seconde extrémité (13), au véhicule, caractérisé en ce que ladite lame courbe (11), est destinée à être disposée en avant de la roue correspondante et s'étend sur un angle dont le sommet est sensiblement confondu avec le centre de ladite roue et dont l'amplitude est sensiblement égale à 90°.

7 - Système selon la revendication 6, caractérisé en ce que ladite lame courbe (11) comporte, à sa première extrémité (12), des moyens de fixation permettant de la fixer rigidement au bras oscillant (1).

8 - Système selon la revendication 6 ou la revendication 7, caractérisé en ce que ladite lame courbe (11) comporte, à sa seconde extrémité (13), des moyens d'articulation permettant de l'articuler au véhicule.

9 - Système selon l'une quelconque des revendications 6 à 8, caractérisé en ce que ladite lame courbe (11) présente une section progressivement décroissante depuis son extrémité (12) destinée à être reliée au bras oscillant (1) jusqu'à son extrémité (13) destinée à être reliée au véhicule.

10 - Système selon l'une quelconque des revendications 6 à 9, caractérisé en ce que ladite lame courbe (11) est réalisée en matière composite fibres-résines synthétiques.

11 - Véhicule, caractérisé en ce qu'il est équipé d'au moins une suspension selon l'une quelconque des revendications 1 à 5 ou d'au moins un système de rappel élastique selon l'une quelconque des revendications 6 à 10.

## Claims

1. Suspension for a two-wheel axle of a vehicle, of the type comprising two arms hinged to said vehicle and being able to oscillate about an axis transverse to said vehicle, each arm carrying one of said wheels, elastic means being associated to said arms to counteract vertical movements of said wheels and said elastic means comprising, for each wheel (2), at least one curved blade (11) connected, at a first end (12), to the corresponding oscillating arm (1) in the vicinity of the end (1b) of the latter hinged to the vehicle, and connected, at the second end (13) thereof, to the vehicle, characterized in that said curved blade (11) extends at least substantially concentrically to the axis (2a) of the wheel (2), and is disposed in front of the latter, and in that said curved blade (11) extends over an angle, the apex of which substantially merges in the centre of the wheel and the amplitude of which is substantially equal to 90°.

2. Suspension according to claim 1, characterized in that said curved blade (11) is rigidly attached to the oscillating arm (1) and is hinged to the vehicle.

3. Suspension according to any one of the preceding claims, characterized in that the first end (12) of said curved blade (11) is shaped as a loop and is fixed to the oscillating arm (1) so that said loop is coaxial with the articulation axis (X-X') of the arm (1) on the frame (5).

4. Suspension according to claim 3, characterized in that, at its end (1b) hinged to the frame (5), the arm (1) terminates by a sleeve (30) on which is fixed said loop forming the first end (12) of the blade (11).

5. Suspension according to claim 4, characterized in that said sleeve (30) allows the passage of an anti-tilting torsion bar (10).

6. Elastic return system of a wheel of a two-wheel axle of a vehicle equipped with a suspension comprising two arms capable of oscillating about an axis transverse to said vehicle and carrying, each, one of said wheels, said system comprising at least one curved blade (11) intended to be connected, at a first end (12), to the corresponding oscillating arm (1) in the vicinity of the end (1b) of the latter hinged to said vehicle and, at its second end (13), to the vehicle, characterized in that said curved blade (11) is intended to be disposed in front of the corresponding wheel and extends over an angle, the apex of which substantially merges in the centre of said wheel and the amplitude of which is substantially equal to 90°.

7. System according to claim 6, characterized in that said curved blade (11) comprises, at its first end (12), fixing means for rigidly fixing it to the oscillating arm (1).

8. System according to claim 6 or claim 7, characterized in that said curved blade (11) comprises, at its second end (13), hinging means for hinging it to the vehicle.

9. System according to any one of claims 6 to 8, characterized in that said curved blade (11) has a progressively decreasing cross-section from its end (12) intended to be connected to the oscillating arm (1) towards its end (13) intended to be connected to the vehicle.

10. System according to any one of claims 6 to 9, characterized in that said curved blade (11) is made of a composite material consisting of fibers and synthetic resins.

11. Vehicle, characterized in that it is equipped with at least one suspension according to any one of claims 1 to 5 or with at least one elastic return system according to any one of claims 6 to 10.

## Patentansprüche

1. Fahrzeugaufhängung für Doppelradlaufwerke bestehend aus zwei am Fahrzeug angelenkte Arme und schwenkbar um eine transversal zum Fahrzeug verlaufende Achse, wobei jeder Arm eines der Räder trägt, eine elastische Einrichtung jedem Arm zugeordnet ist, um den Vertikalbewegungen der Räder entgegenzuwirken, und wobei die elastische Einrichtung für jedes Rad (2) zumindest ein gekrümmtes Blatt (11) aufweist, das an einem ersten Ende (12) mit dem jeweiligen Schwenkarm (1) in der Nähe des am Fahrzeug angelenkten Endes (1b) dieses Schwenkarms und an seinem zweiten Ende (13) mit dem Fahrzeug verbunden ist, dadurch gekennzeichnet, dass das gekrümmte Blatt (11) allgemein konzentrisch zur Achse (2a) des Rades (2) verläuft, indem es vor letzterem angeordnet ist, und dass das gekrümmte Blatt (11) über einen Winkel verläuft, dessen Spitze allgemein mit der Mitte des Rades zusammenfällt und dessen Grösse allgemein bei 90° liegt.

2. Fahrzeugaufhängung nach Anspruch 1, dadurch gekennzeichnet, dass das gekrümmte Blatt (11) starr am Schwenkarm (1) befestigt und am Fahrzeug angelenkt ist.

3. Fahrzeugaufhängung nach einem der vorhergehenden Ansprüche 1 bis 2, dadurch gekennzeichnet, dass das erste Ende (12) des gekrümmten Blattes (11) in Form eines Bügels oder einer Schleife ausgebildet und am Schwenkarm (1) derart befestigt ist, dass der Bügel mit der Gelenkachse (X-X') des Arms (1) am Fahrgestell (5) koaxial verläuft.

4. Fahrzeugaufhängung nach Anspruch 3, dadurch gekennzeichnet, dass der Arm (1) an seinem am Fahrgestell (5) angelenkten Ende (1b) in einer Muffe (3) ausläuft, an der der das erste Ende (12) des Blattes (11) bildende Bügel befestigt ist.

5. Fahrzeugaufhängung nach Anspruch 4, dadruch gekennzeichnet, dass die Muffe (30) als Durchgang für einen Drehstab-Stabilisator (10) dient.

6. Elastisches Rückholsystem eines Rades eines Doppelradlaufwerks eines Fahrzeuges, das mit einer Aufhängung bestehend aus zwei Armen, die um eine zum Fahrzeug transversalen Achse schwenkbar sind und jeweils eines der Räder tragen, ausgestattet ist, wobei das System zumindest ein gekrümmtes Blatt (11) aufweist, das dazu vorgesehen ist, an seinem ersten Ende (12) mit dem jeweiligen Schwenkarm (1) in der Nähe des am Fahrzeug angeklenkten Endes (1b) des Schwenkarms (1) und an seinem zweiten Ende (13) mit dem Fahrzeug verbunden zu werden, dadurch gekennzeichnet, dass das gekrümmte Blatt (11) dazu vorgesehen ist, vor dem entsprechenden Rad angeordnet zu werden, und dass es sich über einen Winkel erstreckt, dessen Spitze im wesentlichen mit dem Mittelpunkt des Rades zusammenfällt und dessen Grösse allgemein bei 90° liegt.

7. Elastisches Rückholsystem nach Anspruch 6, dadurch gekennzeichnet, dass das gekrümmte Blatt (11) an seinem ersten Ende (12) Befestigungsmittel aufweist, durch die es am Schwenkarm (1) starr festgelegt werden kann.

8. Elastisches Rückholsystem nach einem der vorhergehenden Ansprüche 6 und 7, dadurch gekennzeichnet, dass das gekrümmte Blatt (11) an seinem zweiten Ende (13) Gelenkmittel aufweist, durch die es am Fahrzeug gelenkig angebracht werden kann.

9. Elastisches Rückholsystem nach einem der vorhergehenden Ansprüche 6 bis 8, dadurch gekennzeichnet, dass das gekrümmte Blatt (11) von seinem Ende (12) ausgehend, das am Schwenkarm (1) verbunden werden soll, bis zu seinem Ende (13), das mit dem Fahrzeug verbunden werden soll, eine fortschreitend kleiner werdenden Abschnitt aufweist.

10. Elastisches System nach einem der vorhergehenden Ansprüche 6 bis 9, dadurch gekennzeichnet, dass das gekrümmte Blatt (11) aus einem Kunstharzfaser-Verbundstoff gefertigt ist.

11. Fahrzeug, dadurch gekennzeichnet, dass es ausgestattet ist mit zumindest einer Aufhängung nach einem der vorhergehenden Ansprüche 1 bis 5 oder mit einem elastischen Rückholsystem nach einem der Ansprüche 6 bis 10.

EP 0 249 539 B1

FIG.1

FIG.4

FIG.2

FIG.3